**Europäisches Patentamt**

**European Patent Office**

**Office européen des brevets**

(11) Publication number: **0 164 097**
A2

# EUROPEAN PATENT APPLICATION

(21) Application number: **85106866.8**

(22) Date of filing: **04.06.85**

(51) Int. Cl.⁴: **B 23 B 5/16**

(30) Priority: **06.06.84 IT 5346384 U**

(43) Date of publication of application: **11.12.85**
**Bulletin 85/50**

(84) Designated Contracting States: **BE DE FR GB**

(71) Applicant: **Officine Carrozzerie PATAVIUM A. Zanin S.p.A., Via Borromea 1, I-35030 Sarmeola di Rubano (Padova) (IT)**

(72) Inventor: **Zanin, Pierluigi,, Via Torino 1, I-35030 Rubano (Province of Padova) (IT)**

(74) Representative: **Modiano, Guido et al, MODIANO, JOSIF, PISANTY & STAUB Modiano & Associati Via Meravigli, 16, I-20123 Milan (IT)**

(54) **Fluid-operated portable tool for end chamfering large diameter pipe sections particularly in pipeline applications.**

(57) The tool comprises expandable shoes (11) adapted for locking engagement with a pipe to be machined and mounted on a centre body (10). A head secured to said body (10) supports a rotatable tool holder plate (17) and hydraulic motors for driving and feeding said plate. A first section of a hydraulic power circuit is operated at high pressure for driving the rotatable tool holder plate (17), a second section of the hydraulic circuit being operated at low pressure for driving the expandable shoes (11).

" FLUID-OPERATED PORTABLE TOOL FOR END CHAMFERING
LARGE DIAMETER PIPE SECTIONS PARTICULARLY IN
PIPELINE APPLICATIONS "

This invention relates to a fluid-operated portable tool -- more commonly termed "beader" -- for end chamfering large diameter pipe sections particularly in pipeline applications with pipe diameters in the 457 to 1,423 mm (18 to 56 inches) range.

Portable tools for the above-specified applications have been known and widely utilised. They comprise a rigid frame -- adapted to fit into a pipe at the end thereof to be machined -- which carries a set of expandible shoes for holding the pipe securely, and a rotating toolholder plate operatively connected to an axial feed means.

In such prior tools, the expandible shoes, rotating toolholder plate, and axial feed means are operated hydraulically from a common pump whose delivery pressure and rate are adjusted to meet the input requirements of the hydraulic motor which drives the plate rotatively, which input would be a rated maximum. Consequently, the supply to the plate feed motor and the cylinders of the expandible shoes, which require lower pressures and flow rates, occurs by lamination type throttling of the maximum flow rate.

This represents a serious drawback on account of the hydraulic fluid becoming heated by the lamination process, which drawback is obviously aggravated when the tool is operated in a hot environment.

Furthermore, prior tools do not provide for variation of the rotating plate cutting speed, which makes them less suitable for machining different pipe diameters.

Another drawback of prior tools of the type specified above resides in the absence of safeguarding means from the toolholder plate circuit, thereby the feed members may easily be broken by improper handling.

Accordingly, it is an aim of the present invention to provide a portable fluid-operated tool for end chamfering large diameter pipe sections which overcomes such drawbacks.

Within the above aim, it is an object of the invention to provide a portable fluid-operated tool for end chamfering large diameter pipe sections which permits continuous control of the rotating plate cutting speed (within maximum and minimum limits) in a simple and convenient way for the tool operator.

It is a further object of the invention to provide a portable fluid-operated tool equipped with means effective to prevent breakage, especially of the feed mechanism, brought about by anomalous strains which may be generated either naturally or due to improper handling.

A not unimportant object of the invention is that of providing a portable fluid-operated tool which is adapted to minimize heating of the working hydraulic fluid, thereby significantly improving reliability of the tool in operation especially when used in a hot environment.

These and other objects which will become apparent from the detailed description that follows, are achieved, according to this invention, by a fluid-operated portable tool for end chamfering large diameter pipes, particularly in pipeline applications, of a type including a set of expandible shoes for securely holding a pipe to be machined and a rotatable tool holder plate driven by axial drive means, characterized in that it comprises:

a centre body including a pair of juxtaposed fluid-operated cylinders driving, through intermediate linkages, corresponding front and rear movable supports for the expandible shoes;

a head, secured to said body, supporting the rotating toolholder plate, a motor means for driving said plate, and a motor means for feeding said plate;

a first section of a hydraulic power circuit, operated at a high pressure, having a primary pump operatively connected -- with the interposition of a continuous flow rate regulator -- to the motor driving said rotating plate; and

a second hydraulic circuit section with duty functions at a low pressure, having a secondary pump operatively connected -- through a flow divider -- to a pair of cylinders driving the expandible shoes, and via electric distributors controlled by travel limit sensors, to the hydraulic motor feeding said rotating plate.

Further features and advantages will be more clearly understood from the following detailed description, with reference to the accompanying drawings, in which:

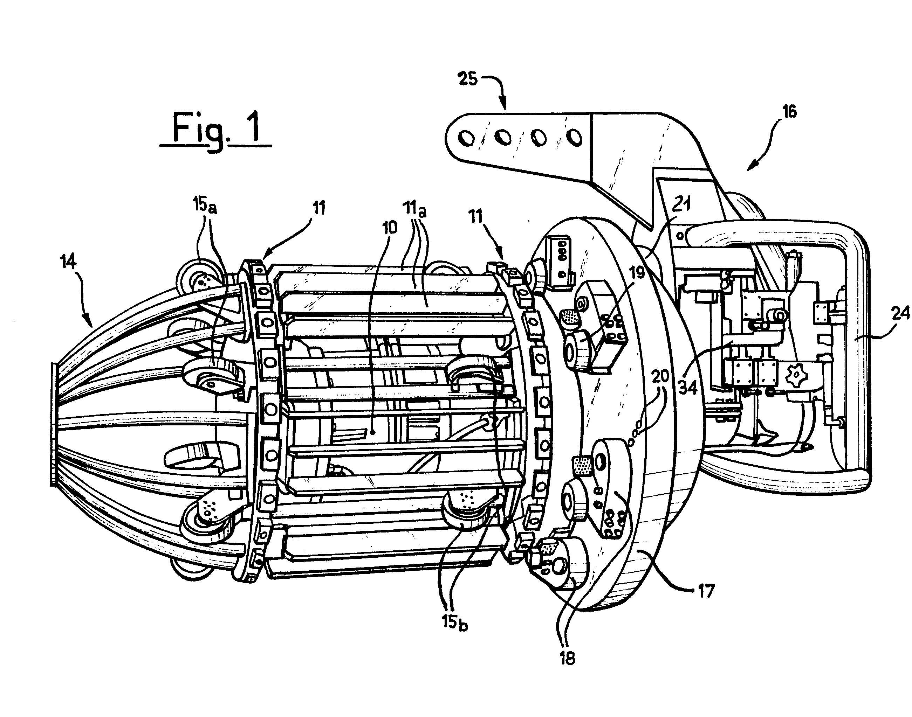

Figure 1 is a     perspective view of the tool;

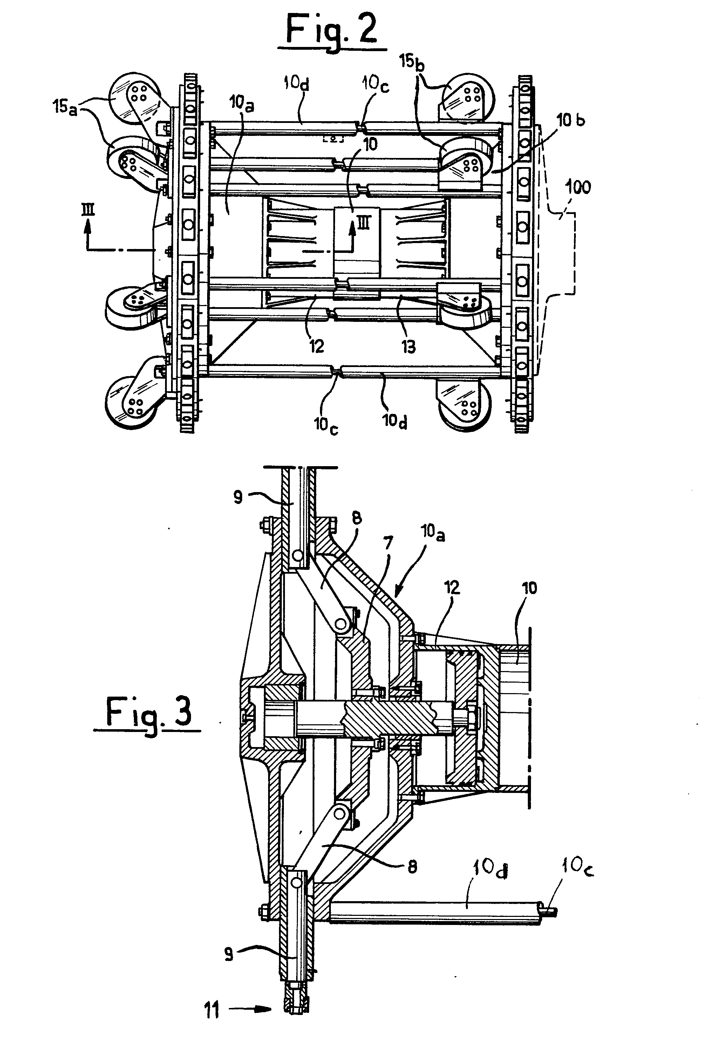

Figure 2 is a detail view of the centre body;

Figure 3 shows a  fragmentary axial section taken to an enlarged scale along the line III-III of Figure 2;

Figure 4 is a detail view, to an enlarged scale and partly in section, of the support head for the rotating toolholder plate; and

Figure 5 is a block diagram of the power and duty hydraulic circuits.

The tool according to this invention has a rigid centre body 10 around which is arranged a double set of radially expandible shoes 11 adapted to engage the inside surface of an end portion of a pipe to be machined thereby. The shoes    11 are subjected to the action of a pair of double-acting hydraulic cylinders 12 and 13 provided at opposite ends of the body 10 and each driving, through a pusher 7 and respective articulation connecting rods 8, two sets of movable supports 9 — respectively, front and rear ones — for said shoes 11. The pusher 7, connecting rods 8, and supports 9 in each set are enclosed in a frame-like structure comprising corresponding end plates 10a-10b interconnected by ties 10c and spacers 10d forming a frame. Also extending longitudinally between the end plates 10a, 10b are longitudinal plates 11a disposed edgewise radially around said frame. That end of the tool which is intended to fit inside the pipe is provided, moreover, with an ogival cage 14 adapted to facilitate its introduction, and for this purpose, there are also provided, both at the ogival cage and interposed between the expandible shoes, two sets of rubber-faced rollers 15a-15b for guiding and rolling in the pipe. On the other end of the centre body 10, remotely located from the ogival cage, there is mounted a head 16 carrying a rotatable toolholder plate 17. The plate 17 carries, in turn, a set of tool holding clamps 18 each having a guiding roller 19, associated therewith and adapted for rolling engagement with the edge of a pipe to be end chamfered. The tool holding clamps 18 are detachable and positionable radially on the plate 17 to adapt the tool to accommodate different diameter pipes, and for this purpose, they are provided with threaded studs 18a fitting in retaining holes 20 formed in the plate; the holes being substantially arranged in a convolute segmental pattern.

The plate 17 is driven rotatively -- through a pair of reduction gears 17a -- by a first hydraulic motor or drive motor 21 and is also acted upon by a feed mechanism 22. That mechanism, known per se, comprises a threaded shaft, not visible in the drawing figures because it is protected by a dust cover 22a, and is actuated by a second hydraulic motor 23 having a lower power than the first hydraulic motor 21. The threaded shaft engages with a threaded nut seat 22b of a moveable plate 22c, whereto there is connected, by means of a small column 22d, a hollow cylindrical support 22e which rotatably supports the plate 17. The cylindrical support is slidingly supported on an extension 100 of the body 10 facing the head 16. In operation, rotation of threaded shaft within the dust cover 22a causes axial displacement of plate 17.

The two motors 21,23 are supported on a casing of the head 16, which casing also carries a small tool gripping and handling frame 24 and a tool suspension bracket 25 with which the entire tool structure may be suspended e.g. on a balancer crane or the like for a rough positioning of the same.

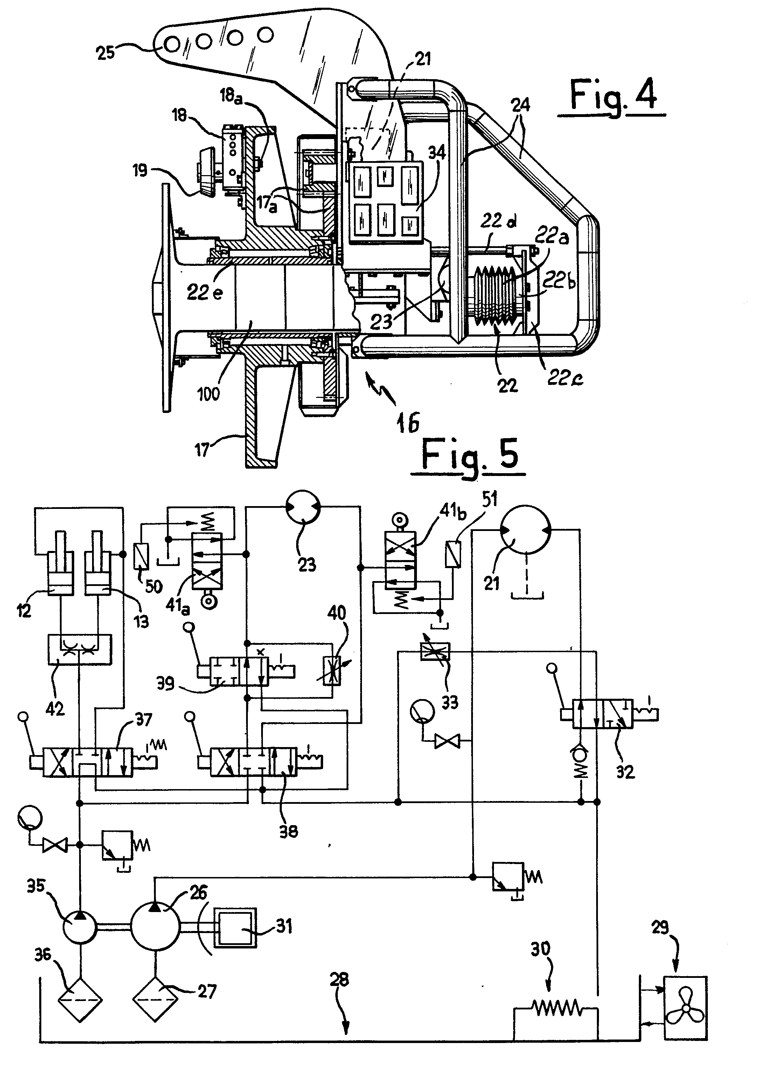

Figure 5 shows the hydraulic circuit for operating the tool just described. It comprises a first, or power, section for supplying a high pressure (60 to 100 bars) to the hydraulic motor 21 driving the plate 17, and a second, or duty, section for supplying a low pressure (about 20 bars) to the feed motor 23 and the pair of double-acting cylinders 12 and 13 driving the expandible shoes 11. The first section comprises a primary pump 26 which draws, through a filter 27, the hydraulic fluid from a common reservoir 28. This reservoir would have an oversize capacity, preferably of about 500 kg of fluid, in order to promote intense fluid temperature controllability.

It is also provided with fittings for its connection to a cooling radiator 29 to be employed in the event of the tool being used in torrid climates, as well as a resistance heater 30 (replaced by a heat exchanger where the pumps are driven by a thermal engine) to be activated when the tool is used instead in cold or arctic climate conditions.

The primary pump 26 and reservoir 28 are advanta_ geously installed on a power plant (not shown) separate from the tool, which also comprises a primary motor (either an electric motor or a petrol engine) 31 for driving the pump.

The primary pump 26 feeds the drive motor 21 through a distributor 32 (of the DP 2616 type) and a variable flow rate regulator 33 (of the QV 10 type), which is positioned on a control panel 34 attached directly to the casing 16a of the tool head 16. The regulator 33 is hydrostatically compensated and will maintain a constant flow rate after the same has been adjusted for a sought value.

The second section of the hydraulic circuit includes, in turn, a secondary pump 35 keyed to the same threaded shaft as the primary pump 26, which draws fluid — through a filter 36 — from the common reservoir 28. Through a pair of distributors 37-38 (of the DK 1144 and DK 1141 types, respectively), the secondary pump 35 delivery is directed to two circuit branches in parallel, respectively, a supply branch to the feed motor 23 and a supply branch to the cylinder pair 12 and 13. The branch supplying the motor 23 includes a second distributor 39 (of the DK 1161 type) associated with a flow rate regulator 40 (of the FF 257.5/3 type) and a pair of electric distributors 41a-41b controlled by travel limit sensors 50-51, respectively, serving the function of automatic stopping members to stop the feed movement of the plate 17 (by shutting off the supply to it). The branch leading to the pair of cylinders 12 and 13 includes a flow divider 42 (of the DRF - OM 51.03.90.03.38 type) which has the function of ensuring that fluid flows simultaneously into and out of said cylinder pair in order to avoid the likelihood of both an improper positioning of the tool in pipe to be end chamfered and, during the release phase, of the tool being released from the pipe too suddenly.

Of course, the effects of the present application also extend to embodiments accomplishing comparable usefulness on the basis of this same inventive concept.

## CLAIMS

1. A fluid-operated portable tool for end chamfering large diameter pipes, particularly in pipeline applications, of a type including a set of expandible shoes (11) for securely holding a pipe to be machined and a rotatable toolholder plate (17) driven by axial advancement means (21), characterized in that it comprises:

a centre body (10) including a pair of juxtaposed fluid-operated cylinders (12,13) driving, through intermediate linkages (7,8), corresponding front and rear movable supports (9) for the expandible shoes (11);

a head (16), secured to said body (10), supporting the rotatable toolholder plate (17), a motor means (21) for driving said plate (17), and a motor means (23) for feeding said plate (17);

a first section of a hydraulic power circuit, operated at a high pressure, having a primary pump (26) operatively connected -- with the interposition of a continuous flow rate regulator (33) -- to a hydraulic motor (21) driving said rotatable toolholder plate (17); and

a second hydraulic circuit section with duty functions at a low pressure, having a secondary pump (35) operatively connected -- through a flow divider (42) -- to a pair of cylinders (12,13) driving the expandible shoes (11), and via electric distributors (41a,41b) controlled by travel limit sensors (50,51), to hydraulic motor (23) feeding said rotatable holder plate (17).

2. A tool according to Claim 1, characterized in that said centre body (10) comprises hollow end plates (10a,10b) containing said intermediate linkages (7,8) and sets of front and rear movable supports (9) for the expandible shoes (11), said plates (10a,10b) being secured to the centre body (10) and to each other by ties (10c) and spacers (10d) forming a frame.

3. A tool according to Claims 1 and 2, characterized in that the rotatable plate (17) is provided with tool holding clamps (18) being detachable from and radially positionable on said plate (17) by means of cooperating studs (18a) and retaining holes (20).

4. A tool according to Claims 1 to 3, characterized in that said primary (26) and secondary pumps (35) are keyed to a common drive shaft.

5. A tool according to the preceding claims, characterized in that said primary (26) and secondary pumps (35) draw hydraulic fluid from a common reservoir (28) equipped with a means (29,30) of controlling the temperature of said fluid.

6. A tool according to the preceding claims, characterized in that it comprises, on one extension of said centre body (10), a rigid ogival frame (14), and on another extension the rotatable toolholder plate (17) and a supporting casing (16a) for the plate driving and feeding motors (21,23) to which a second grip and handling frame (24) and a suspension bracket (25) are fastened.

7. A tool according to any of the preceding claims, characterized in that the continuous flow regulator

0164097

(33), associated with the toolholder plate (17) drive motor (21) supply circuit, is hydrostatically compensated and is located on a control panel (34) made fast with the casing (16a) containing the hydraulic motors (21,23).

0164097

Fig. 1

0164097

## Fig. 2

## Fig. 3

0164097

Fig. 4

Fig. 5